# EUROPEAN PATENT APPLICATION

(11) **EP 1 044 880 A1**
(43) Date of publication of application: **18.10.2000**
(21) Application number: 00201338.1
(22) Date of filing: 14.04.2000
(51) Int. Cl.: B65B 5/06, B65B 5/10, B65G 37/00

(54) **Device for placing sacks filled with a product in a box**

(30) Priority: 15.04.1999 NL 1011812
(71) Applicant: Case Packing Sales Europe B.V., 6039 AP Stramproy (NL)
(72) Inventor: Aquarius, Pieter Theodorus Hubertus, 6039 EJ Stramproy (NL)
(74) Representative: Ferguson, Alexander

(57) **Abstract**

Device for placing sacks (2) filled with a product in a box (1). The device has at least one carrier surface for carrying a sack, the carrier surface being formed by a first and a second carrier surface part (3,3',4,4') which can be placed next to each other. A first (5) and a second (6) endless conveyor means are placed at a distance from and next to each other, and in between them form a conveyor space (7) for a sack (2). The conveyor space (7) has a supply end (8) and a discharge end (9). To each of the conveyor means (5,6) a carrier surface part (3,4,3',4') is attached, in which the carrier surface can be formed in the conveyor space. Driving means drive each conveyor means (5,6) such that the two carrier surface parts can at least almost simultaneously and in the direction of the supply end (8) be moved to the discharge end (9) of the conveyor space (7). A frame is provided for carrying the endless conveyor means (5,6). The device has a supply side (10) for the sacks (2). A first (11) and a second (12) stop surface part are attached to the frame at the side opposite the supply side (10), in which the stop surface parts (11,12) are pivotable from a first position, in which the stop surface parts form a first stop surface (11,12), to a second position facing away from the conveyor space (7). The frame with the endless conveyor means and the stop surface parts (11,12) are rotatable over at least almost 90 degrees.

## Description

The present invention relates to a device for placing sacks filled with a product, such as for instance sacks of liquid detergent or solid soap powder, coffee or sacks with chilled or deep frozen products in particular foodstuffs, in a box.

Many of such devices are known, but up until now there is no device which is able to place sacks both in a lying and an upright position in a box in a simple and satisfactory manner.

The present invention has the object to provide a device with which in a simple and reproducible manner sacks filled with a product can both be placed in a lying and an upright position in a box.

To that end the present invention provides a device for placing sacks filled with a product in a box, which device is provided with:
- at least one carrier surface for carrying a sack, the carrier surface being formed by a first and a second carrier surface part which can be placed next to each other,
- a first and a second endless conveyor means placed at a distance from and next to each other, in which between the endless conveyor means a conveyor space for a sack is formed, which conveyor space has a supply end and a discharge end, in which to each of the conveyor means a carrier surface part is attached, in which the carrier surface can be formed in the conveyor space,
- means for intermittently driving each conveyor means to such an extent that the two carrier surface parts can at least almost simultaneously and in the direction of the supply end be moved to the discharge end of the conveyor space,
- a frame for carrying the endless conveyor means,
- a supply side for the sacks,
- a first and a second stop surface part attached to the frame at the side opposite the supply side, in which the stop surface parts are pivotable from a first position, in which the stop surface parts form a first stop surface, to a second position facing away from the conveyor space,
- the frame with the endless conveyor means and the stop surface parts being rotatable over at least almost 90 degrees. Because the frame is rotatable over 90 degrees, the sacks cannot only be placed in a box from the discharge end, but also from the side opposite the supply side, the pivotable stop surface parts releasing the sacks for placement in a box in the second position.

In an embodiment of a device according to the invention the device is further provided with a second stop surface attached to the frame on the same side as the supply side, which second stop surface takes up a fixed position with regard to the conveyor space. As a result the sacks are enclosed together with the first and second stop surface, so that a correct positioning of the sacks relative to one another is possible, which correct positioning promotes a desired placement of the sacks in a box. Moreover as a result the tilting over 90 degrees of the endless conveyor means with stop surfaces and sacks is no problem.

In a further embodiment of a device according to the invention the device is further provided with a fourth stop surface attached to the frame on the side opposite the supply side, the fourth stop surface being pivotable from a first position in line with the first stop surface until in a second position parallel to the carrier surface. Said fourth stop surface stops the sacks when these are supplied, and then may also serve as pressing surface for the sacks in the second position so that a compact placement in a box is possible.

Preferably the first and second endless conveyor means are driven by separate driving means.

A further improvement in making the sacks compact is achieved when the first and second endless conveyor belts can be moved towards each other and away from each other. In this way the conveyor space can in fact be made larger or smaller as desired.

Making the sacks even more compact can be achieved when the first stop surface and the second stop surface can be moved towards each other and away from each other.

Preferably the device is further provided with a vibrating device for having the first and second endless conveyor means vibrate, so that particularly with sacks filled with a granular product such as solid soap powder a very compact packaging in boxes is possible.

In an embodiment of a device according to the invention each of the endless conveyor means are provided with two pairs of sprocket wheels, in which opposite sprocket wheels carry endless chains, the carrier surface parts being attached to the chains. Preferably an endless belt is attached to the chains, so that further enclosure of the sacks filled with a product is obtained. As a result the tilting over 90 degrees of the endless conveyor means with stop surfaces and sacks is no problem.

In an embodiment of a device according to the invention the device is further provided with means for guiding sacks into a box.

Some exemplary embodiments of a device according to the invention will be described below by way of example on the basis of the drawing.
Figures 1A through 1D show a view of a device according to the present invention in different positions of the carrier surface,
Figure 2 shows a position which is rotated over 90 degrees with respect to figure 1D,
Figures 3A through 3D are the views in perspective of the figures 1A through 1D, respectively, and
Figure 4 is a view in perspective of figure 2.

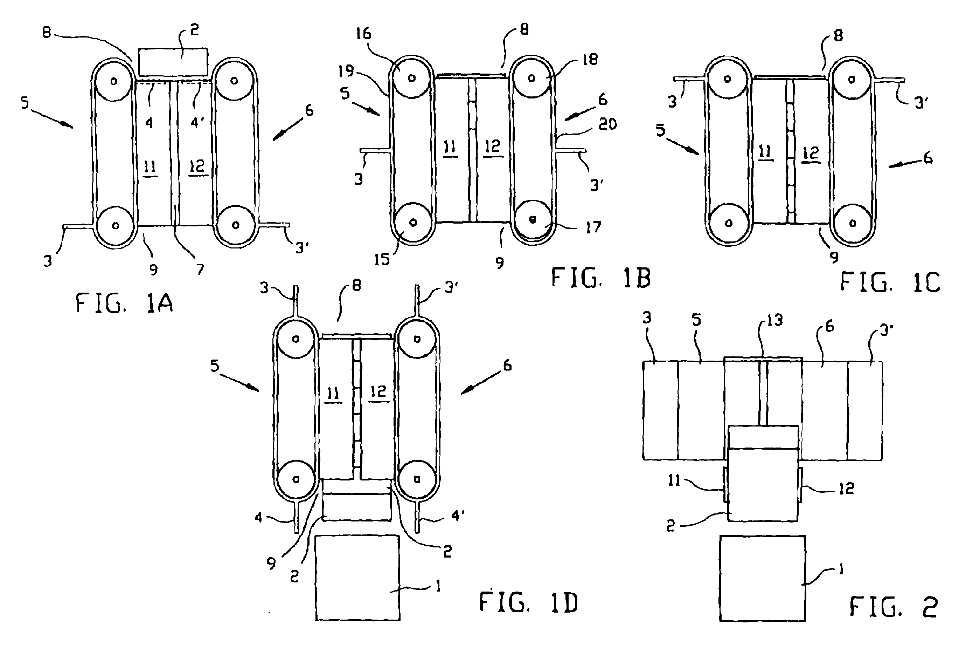

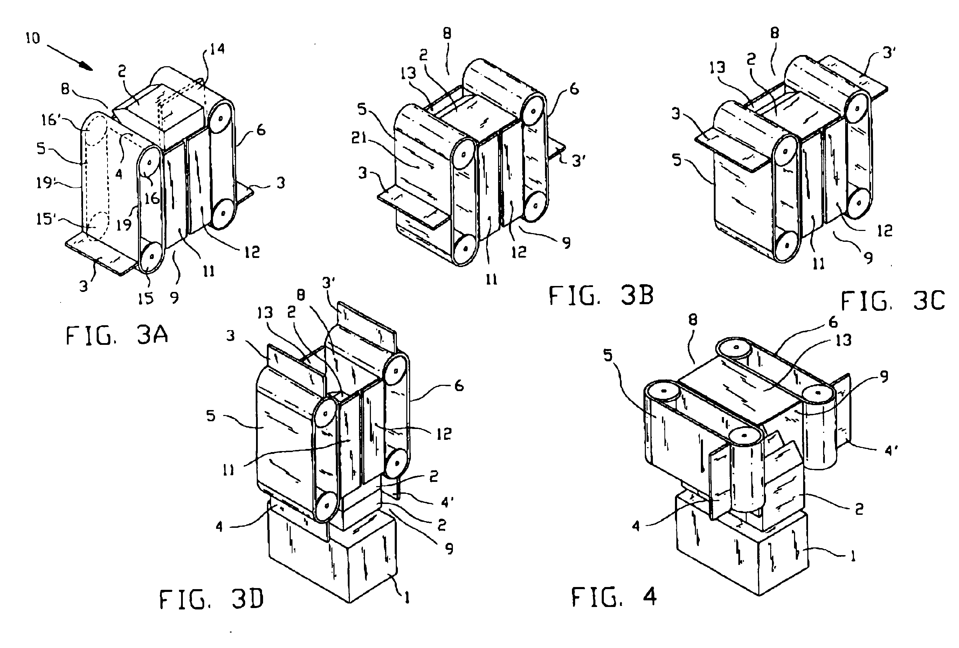

In figure 1A a view of a device according to the present invention in a position in which a sack 2 is taken into the device is shown, and in figure 3A a perspective view is shown of the same. In figure 1B and 1C (3B and 3C, respectively) positions are shown in which the supplied sack 2 is conveyed downwards.

The device according to the present invention is meant for placing sacks 2 filled with a product, such as for instance sacks of liquid detergent or solid soap powder, coffee or sacks with chilled or deep frozen products in particular foodstuffs, in a box 1 (Fig. 1D, 2, 3D, 4).

The device has at least one carrier surface 4, 4' for carrying a sack 2. The carrier surface can be formed by a first and a second carrier surface part 3, 3'; 4, 4' which can be placed next to each other.

A first 5 and a second 6 endless conveyor means placed at a distance from and next to each other are provided. In between the endless conveyor means 5, 6 a conveyor space 7 for a sack 2 is formed. The conveyor space 7 has a supply end 8 and a discharge end 9, which in the example shown are situated at the upper side and at the lower side, respectively. To each of the conveyor means 5, 6 a carrier surface part 3, 4; 3', 4' is attached, in which the carrier surface can be formed in the conveyor space 7.

For conveying the sacks 2 from the supply end 8 to the discharge end 9 means (not shown) are provided for intermittently driving each conveyor means 5, 6 to such an extent that the two carrier surface parts 3, 4; 3', 4' can at least almost simultaneously and in the direction of the supply end 8 be moved to the discharge end 9 of the conveyor space 7. In this way a number of sacks 2 (see figure 1C and 3C) can be accommodated between the two endless conveyor means 5, 6. The driving means are not further shown, as such driving means, for instance motors, servomotors etcetera, are known per se. Preferably the first 5 and second 6 endless conveyor means are driven by separate driving means.

The endless conveyor means 5, 6 are carried by a frame (which for the sake of clarity of the drawing is not shown).

The device has a supply end 10 (figure 3A) for sacks 2. On the frame at the side opposite the supply side 10 a first 11 and a second 12 stop surface part are attached. The stop surface parts 11, 12 are pivotable from a first position in which the stop surface parts form a first stop surface 11, 12 (see for instance figure 1 C), to a second position facing away from the conveyor space 7, as is shown in figure 2.

As shown in figures 1A through 1C and 3A through 3C, sacks 2 are supplied one by one to the inventive device, which sacks 2 by driving of the endless conveyor means 5, 6 are conveyed to the discharge end 9, until a certain number of sacks 2 are situated between the conveyor means 5, 6. As shown in figures 1D and 3D the carrier surface parts 4, 4' will no longer be in line with each other at further rotation of the conveyor means 5, 6, so that the sacks fall down, ending up in a box 1 placed below the device. In the example shown the sacks 2 will therefore be placed lying down in the box 1.

The device according to the present invention, however, is also suitable for placing sacks filled with a product in an upright position in a box 1. To that end after the position in figure 1 C and 3C, respectively, has been reached, the frame with the endless conveyor means 5, 6 and the stop surface parts 11, 12 is rotated over at least almost 90 degrees so that a position as shown in figures 2, 4 is reached. After that the stop surface parts 11, 12 now functioning as carrier surfaces for the sacks 2, are pivoted to their second position, so that the sacks 2 fall into the box 1.

Preferably the device is further provided with a second stop surface 13 (see for instance figure 2, 3B) which is attached to the frame on the same side as the supply side 10. A second stop surface 13 has a fixed position with respect to the conveyor space 7. As a result the sacks 2 are enclosed together with the first and the second stop surface 11, 12 so that a correct positioning of the sacks 2 relative to one another is possible, which correct positioning promotes a desired placement of the sacks 2 in the box 1. Moreover as a result the tilting over 90 degrees of the endless conveyor means 5, 6 with stop surfaces 11, 12 and the sacks 2 is no problem.

When a fourth stop surface 14 is provided (in figure 3A shown with interrupted lines), which surface is attached to the frame on the side opposite the supply side 10, in which the fourth stop surface 14 is pivotable from a position in line with the first stop surface 11, 12 until in a position parallel to the carrier surface, said fourth stop surface 14 stops the sacks 2 when these are supplied. In the second position said fourth stop surface 14 may also serve as pressure surface, as a result of which the sacks 2 with their products are compressed to a certain degree so that compact placement in a box is possible.

A further improvement of making the sacks 2 compact, is obtained when the first and second endless conveyor belts 5, 6 can be moved towards each other and away from each other. In this way the conveyor space 7 can in fact be made larger or smaller as desired.

Making the sacks even more compact can be achieved when the first stop surface 11 and the second stop surface 12 can be moved towards each other and away from each other. Preferably the device is further provided with a vibrating device known per se (not shown) for having the first and second endless conveyor means 5, 6 vibrate, so that particularly with sacks filled with a granular product such as solid soap powder a very compact packaging in boxes is possible.

Although the conveyor means 5, 6 can be of a variety of constructions, it has appeared advantageous when each of the endless conveyor means 5, 6 are provided with two pairs of sprocket wheels 15, 15'; 16, 16' (for the sake of clarity of the drawing only shown for one side), in which opposite sprocket wheels 15, 16 and 15', 16', respectively, carry endless chains 19, 20. The carrier surface parts 3, 4 are attached to the chains 19, 20. Preferably an endless belt 21 is attached to each of the chains 19, 20. As a result a further enclosure of the sacks filled with a product is obtained. As a result in almost all cases the tilting over 90 degrees of the endless conveyor means with stop surfaces and sacks is no problem. For instance it is also possible to use one chain instead of a number of chains, as a result of which the rest of the construction changes correspondingly.

The device could furthermore possibly be provided with means for guiding sacks 2 into a box 1.

## Claims

1. Device for placing sacks (2) filled with a product in a box (1), which device is provided with:
- at least one carrier surface for carrying a sack (2), the carrier surface being formed by a first and a second carrier surface part (3, 3'; 4, 4') which can be placed next to each other,
- a first (5) and a second (6) endless conveyor means placed at a distance from and next to each other, in which between the endless conveyor means (5, 6) a conveyor space (7) for a sack (2) is formed, which conveyor space (7) has a supply end (8) and a discharge end (9), in which to each of the conveyor means (5, 61 a carrier surface part (3, 4 and 3', 4', respectively) is attached, in which the carrier surface can be formed in the conveyor space (7),
- means for intermittently driving each conveyor means (5, 6) to such an extent that the two carrier surface parts (3, 4; 3', 4') can at least almost simultaneously and in the direction of the supply end (8) be moved to the discharge end (9) of the conveyor space (7),
- a frame for carrying the endless conveyor means (5, 6),
- a supply side (10) for the sacks (2),
- a first (11) and a second (12) stop surface part attached to the frame at the side opposite the supply side (10), in which the stop surface parts (11, 12) are pivotable from a first position, in which the stop surface parts form a first stop surface (11, 12), to a second position facing away from the conveyor space (7),
- the frame with the endless conveyor means and the stop surface parts (11, 12) being rotatable over at least almost 90 degrees.

2. Device according to claim 1, in which the device is further provided with a second stop surface (13) attached to the frame on the same side as the supply side (10), which second stop surface (13) takes up a fixed position with regard to the conveyor space (7).

3. Device according to claim 1 or 2, in which the device is further provided with a fourth stop surface (14) attached to the frame on the side opposite the supply side (10), the fourth stop surface (14) being pivotable from a position in line with the first stop surface (11, 12) until in a position parallel to the carrier surface.

4. Device according to any one of the preceding claims, in which the first (5) and second (6) endless conveyor means are driven by separate driving means.

5. Device according to any one of the preceding claims, in which the first (5) and second (6) endless conveyor belts can be moved towards each other and away from each other.

6. Device according to any one of the preceding claims, in which the first stop surface (11, 12) and the second stop surface (13) can be moved towards each other and away from each other.

7. Device according to any one of the preceding claims, in which the device is further provided with a vibrating device for having the first (5) and second (6) endless conveyor means vibrate.

8. Device according to any one of the preceding claims, in which each of the endless conveyor means (5, 6) are provided with two pairs of sprocket wheels (15, 15'; 16, 16'), in which opposite sprocket wheels (15, 16 and 15', 16', respectively) carry endless chains (19, 20), the carrier surface parts (3, 4) being attached to the chains (19, 20).

9. Device according to claim 8, in which an endless belt (21) is attached to the chains (19, 20).

10. Device according to any one of the preceding claims, in which the device is further provided with means for guiding sacks (2) into a box (1).
